# DEMANDE DE BREVET EUROPEEN

(11) **EP 0 524 845 A1**
(43) Date de publication de la demande: **27.01.1993**
(21) Numéro de dépôt: 92401741.1
(22) Date de dépôt: 22.06.1992
(51) Int. Cl.: F16H 7/02

(54) **Ensemble de transmission synchrone avec contraintes délocalisées dans la courroie**

(30) Priorité: 25.07.1991 FR 9109583
(71) Demandeur: CAOUTCHOUC MANUFACTURE ET PLASTIQUES, F-78005 Versailles (FR)
(72) Inventeur: Bechu, Jean-Pierre, F-92400 Courbevoie (FR)

(57) **Abrégé**

Ensemble de transmission constitué d'une courroie souple synchrone (5) et de poulies dentées associées caractérisé en ce que la géométrie de ladite courroie souple synchrone est définie par un rapport entre longueur du périmètre d'une surface d'appui d'une denture de courroie (10) et longueur de la surface interne entre dents (9) sensiblement égal au rapport des surfaces latérales correspondantes de façon que, lors de l'engrènement, le profil des sommets, des flancs et des creux de dentures de courroie (10) épouse parfaitement et sans jeu les profils correspondants de chaque poulie associée pour que la pression de contact demeure homogène. Application aux transmissions de mouvement sur moteur à quatre temps pour véhicules et applications industrielles à mouvements d'axes indexés.

## Description

L'invention concerne le domaine des transmissions de mouvement de rotation entre éléments montés sur des axes parallèles reliés par liens souples tels que des courroies sans fin à engrènement dans des dentures rigides de poulies par des dents flexibles en élastomère. Ces transmissions sont utilisées en particulier sur des moteurs de véhicules pour l'entraînement des arbres à cames et autres applications industrielles à mouvements d'axes indexés.

L'entraînement des arbres à cames sur moteurs de véhicules devant nécessairement demeurer positif, c'est à dire indexé par rapport à la position relative des poulies, fut longtemps réalisé par des chaînes de Galle sur pignons à dents ou des cascades de pignons. Il fut rénové dans les dernières décennies par l'usage de courroies à armatures souples, solidaires de dents moulées en élastomères qui assurent la synchronisation par engrènement avec les creux de pignons au profil conjugué.

Parmi de nombreux autres, le document US 4.047.444 de J.O. JEFFREY expose l'utilisation d'une courroie dentée constituée d'une courroie plate de transmission de puissance adhérant sur des poulies cylindriques et de dents moulées en relief sur la courroie. Des creux conjugués, ménagés sur les poulies, assurent la synchronisation du mouvement qui pourrait, en principe, être assuré par l'adhérence mécanique, sous l'effet de la tension de l'armature souple. Le but recherché est de proposer un nombre réduit de dents, dans l'objectif de minimiser leur usure, le pignon menant imposant un pas correspondant à une tension de l'armature plus élevée que celle correspondant au pas inscrit sur le pignon mené. L'intervention de la synchronisation par les dents est sensée équilibrer la tension de l'armature à une valeur pratique correspondant à un pas intermédiaire entre les deux valeurs de pas portées par les pignons menant et mené.

Les progrès dans l'indéformabilité longitudinale des armatures souples, couramment réalisées en fibres de verre ou plus récemment en fibres de polyamide aromatique, ont rendu caducs ces arguments de variations d'allongement sous l'effet de la tension.
En conséquence, les courroies synchrones à dents de profil trapézoïdal sont aujourd'hui toutes interchangeables et leurs dimensions font l'objet d'une normalisation.

Cependant, l'entrée en contact périodique des faces d'appui de dents en élastomère avec les faces d'engrènement sur pignons rigides, sous carter en communication avec l'air libre, est toujours source de bruits à la fréquence fondamentale de l'engrènement ou à ses harmoniques. Diverses formes du profil de denture, toujours engendré de façon cylindrique, c'est à dire à section constante sur la largeur de la courroie, ont pour but une amélioration de l'engrènement.

S'inspirant des engrenages rigides où le déplacement du point de contact engendre des courbes en développantes de cercle, les spécialistes proposent des courroies synchrones (non normalisées) à dentures de profil curviligne, formé d'un arc de cercle ou d'arrondis plus complexes.
Ainsi, le document FR 2.238.094 de GOODYEAR définit-il le profil du flanc avant et le profil du flanc arrière des dents par des arcs de cercle centrés sur l'axe primitif de la courroie, engrènant sur le profil d'une poulie défini de façon analogue, pourvu qu'il existe un jeu entre le sommet de la dent et le fond du creux de denture de la poulie. Tout au contraire, les documents FR 2.335.750 FR 2.362.312, de GOODYEAR également, basent leur argumentation sur une compression radiale des crans de courroie, dont la hauteur à l'état libre est supérieure à la profondeur des creux de dentures des poulies, de préférence de 3 % à 7 % de leur hauteur.

Ainsi, une contrainte de compression est-elle revendiquée à partir du fond de dent de la courroie, compression due à l'effet de la tension et qui s'applique donc directement depuis l'armature souple jusque sur le matériau des dentures. L'alternance périodique de compression et de libération des blocs élastomériques constituant les dents de la courroie est une source de discontinuité provoquant des variations de tension de l'armature souple à la fréquence fondamentale de défilement des dentures. Comme pour les dentures à profil trapézoïdal (par choc d'engrènement), mais pour une autre raison (ici par compression de dent), la source périodique de variations de tension engendre le bruit caractéristique de ce type de courroies, enfermées sous carter en communication avec l'air libre.

Le problème de la réduction du bruit de fonctionnement à certains régimes demeure donc à résoudre.

Une certaine analogie se retrouve dans le document WO 86/102982 de DAYCO, qui décrit une courroie dans laquelle les flancs arrondis de chaque dent de courroie prennent appui sur les flancs du creux de la denture de poulie avec un jeu au sommet et à l'enracinement de la dent flexible.
En raison de la discontinuité de ces entrées en contact suivies du décollement en sortie de l'enroulement sur poulie dentée, le problème permanent du bruit dans les courroies synchrones ne se trouve pas résolu par cette amélioration.

L'objectif du système de transmission synchrone objet de la présente invention est la recherche d'une solution aux problèmes de bruit des courroies synchrones.

Dans ce but, l'invention vise à délocaliser les contraintes lors de l'entrée en pression à l'interface courroie souple/ poulie dentée rigide associée et, symétriquement, lors de leur décollement et ce quelle que soit la forme d'engrènement théorique de la denture.

Outre les variations dynamiques de tension de l'armature flexible, une autre source de transmission acoustique est représentée par les mouvements pulsatoires de l'air chassé entre la dent souple de la courroie synchrone et le creux de denture des poulies dentées associées. Pour la réduire, une assimilation au fonctionnement des courroies lisses à adhérence mécanique est recherchée, afin que l'air de chaque couche limite aérodynamique entraînée par les deux solides en contact soit chassé, de façon continue, par leur rapprochement, puis réalimenté, avec le moins de discontinuité possible.

L'invention porte sur un ensemble de transmission constitué d'une courroie souple synchrone et de ses poulies dentées associées, équipé, pour ladite courroie, de dentures de synchronisation en composition élastomérique intimement liée à une nappe flexible constituant l'armature de renforcement et, pour les poulies dentées associées, de creux de géométrie conjuguée, à flancs obliques, de profil constant sur toute la largeur utile où se produit l'engrènement.

L'invention est caractérisée en ce que la géométrie de la courroie souple synchrone est définie par un rapport entre la longueur du périmètre d'une surface d'appui d'une denture de courroie, enfermée sur trois côtés par les flancs obliques et le sommet de denture venant au contact du fond du creux de dent de la poulie dentée associée, et la longueur de la surface interne entre dents de ladite courroie souple synchrone, ledit rapport étant sensiblement égal au rapport des surfaces latérales correspondantes.
De ce fait, lors de l'engrènement sur les poulies dentées associées à ladite courroie souple synchrone, le profil des sommets, des flancs et des creux de dentures épouse parfaitement et sans jeu les profils des éléments rigides correspondants desdites poulies dentées associées, pour que la pression de contact demeure homogène sur toute la surface des sommets, des flancs obliques et des creux de dents.

L'invention sera mieux comprise à la lecture de la description accompagnant les dessins, dans lesquels :
- la figure 1 est une vue générale de l'ensemble de transmission courroie souple synchrone/poulies dentées associées, équipant par exemple le moteur à quatre temps d'un véhicule ou un matériel à mouvements d'axes indexés.
- la figure 2 est une vue latérale de l'engrènement au voisinage de l'entrée des dents de la courroie souple synchrone sur le creux de denture d'une poulie dentée associée ;
- la figure 3 est un agrandissement d'une denture de l'ensemble de transmission courroie souple synchrone/poulie dentée associée, pour en expliciter la répartition des efforts exercés.

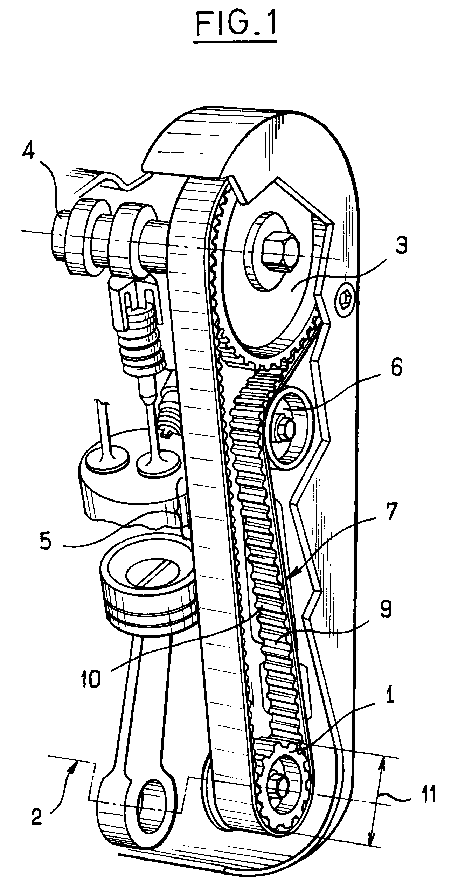

La figure 1 est une vue générale d'un ensemble de transmission courroie souple synchrone/poulies dentées associées dans un rapport 2, équipant tout moteur à quatre temps pour véhicule de conception récente ou applications industrielles à mouvements d'axes indexés.

Une poulie dentée motrice (1) sur l'axe du vilebrequin (2) entraîne à vitesse moitié une poulie dentée menée (3), solidaire d'un arbre à cames (4) en tête des cylindres, au moyen d'une courroie souple synchrone (5). La tension est généralement réglée par un galet de réglage (6) roulant sur le dos lisse (7) de ladite courroie souple synchrone (5). Son armature flexible (8) est pratiquement toujours formée d'une nappe de renforcement, le plus généralement textile, formée de retors enroulés en hélice à spires jointives et imprégnés d'une composition élastomérique qui forme à la fois le dos lisse (7), la surface interne entre dents (9) et les dentures de courroie (10) de la courroie souple synchrone.

Dans un exemple illustratif la tension permanente assurée sur l'entraxe des poulies dentées motrice (1) et menée (3), qui peut atteindre, par suite de la dilatation du carter aux températures extrèmes une valeur de 30 daN mesurée sur chaque brin de la courroie souple synchrone (5), exerce, sur la surface en contact de celle-ci enroulée sur le diamètre de la poulie dentée motrice (1) de diamètre 58 millimètres et de largeur 20 millimètres, une pression voisine de 5 bars, qui passe donc à 2,5 bars sur la poulie dentée menée (3).

Une courroie souple à adhérence mécanique, sans dentures, qui s'enroulerait sur le diamètre sommital (11) de ladite poulie dentée motrice (1) serait capable d'exercer un couple moteur ne dépassant pas 10 N.m mais largement suffisant pour l'entraînement de l'arbre à cames et même pour transmettre ses variations dynamiques.

Le contact mécanique des dentures de courroie (10), par leurs flancs obliques (12), avec la paroi oblique du creux de dent (13) de la poulie dentée associée n'est donc pas une nécessité pour des raisons motrices, mais un moyen, préférentiellement déformable, de calage relatif assurant l'indexation, par l'intermédiaire de la courroie souple synchrone (5) entre les positions angulaires des deux axes des poulies dentées motrice (1) et menée (3).

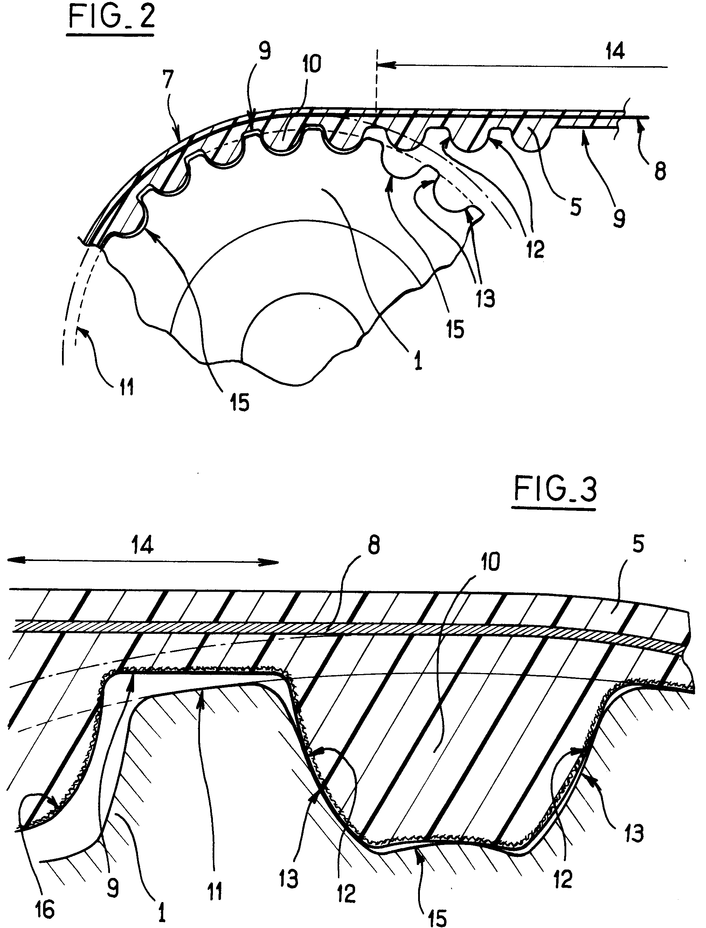

La figure 2 est une vue latérale, localisée au voisinage de l'entrée des dents d'une courroie souple synchrone sur les creux de denture d'une poulie dentée associée.

La courroie souple synchrone (5) est représentée à la fois dans sa trajectoire rectiligne (14), dans laquelle l'armature flexible (8) est tendue entre deux poulies dentées et au début de l'enroulement de sa surface interne entre dents (9) sur le diamètre sommital (11), par exemple de la poulie dentée motrice (1).

En statique, ou en régime stationnaire sans variations dynamiques de couple transmis, la tension dans la trajectoire rectiligne (14), qui s'exerce à travers l'armature flexible (8), est équilibrée par une pression permanente sur la partie enroulée de la courroie souple synchrone (5), pression dont la projection homogène sur le diamètre de la poulie dentée associée est de l'ordre de 5 bars en l'absence de couple moteur, pour l'exemple cité.

En l'absence de dents, la courroie plate sans fin d'épaisseur constante fonctionnant par adhérence mécanique sur le diamètre sommital (11), recevrait, de façon progressive, une pression homogène égale à cette valeur.
Le facteur de forme, rapport entre la surface d'appui et la surface latérale libre, de la couche en composition élastomérique correspondante est favorable pour la transmission de cette pression en présentant des déformations minimes, avec les modules de déformation usuels de la composition élastomérique.

Par l'existence de la denture de courroie (10) la pression indiquée est exercée à travers la composition élastomérique déformable. Pour ce faire, une compression radiale par le fond, éventuellement bombé, du creux de dent (15) sur poulie dentée associée peut s'exercer avec réduction élastique de la hauteur de la denture de courroie (10), qui est initialement supérieure à la profondeur du creux de dent dans l'une des dispositions commes usuellement pratiquée.

Dans ce cas, l'incompressibilité volumétrique de la composition élastomérique constituant la denture de courroie (10) provoque, simultanément, un bombement des parois latérales, dans le sens transversal, et un gonflement, en sens longitudinal, des flancs obliques (12) venant en appui, malgré un jeu initial.

Dans d'autres dispositions connues, la géométrie à l'état libre est conçue de façon que la pression s'exerce préférentiellement sur une partie seulement des dents de la courroie synchrone, par sollicitation locale de leurs flancs obliques (12).
Les déformations internes provoquées ont alors pour conséquence que la pression s'exerce sur l'armature souple (8), sans solliciter le sommet de la dent souple sur le fond du creux de dent (15).

Dans l'un et l'autre cas, il n'existe pas de pression notable sur la surface interne entre dents (9) autre que celle qui est conséquence de la flexion de la courroie souple synchrone (5). De plus, toutes les variations dynamiques du couple transmis, omniprésentes dans l'entraînement d'un arbre à cames, se traduisent par des sollicitations dissymétriques sur les flancs obliques (12), rendant encore plus hétérogène la répartition des contraintes.
Outre l'hétérogénéité de pression, il se produit une déformation géométrique par cisaillement alterné de la composition élastomérique. En effet, la réduction de longueur de la denture de courroie (10), dans le sens circonférentiel, par serrage entre deux parois obliques du creux de dent (13), aussi bien que le gonflement par réduction de hauteur sous le contact du fond du creux de dent (15), sont sources d'une vibration interne à la dent en composition élastomérique. Cette vibration se transmet acoustiquement par le déplacement conjugué de la paroi latérale de la courroie souple, avec tous les phénomènes de résonance élastique afférents.

Au contraire, l'optimisation recherchée dans la présente invention vise la réduction du bruit émis par la courroie souple synchrone (5) grâce à la suppression ou la réduction maximale de la déformation géométrique alternée des dentures de courroie (10).

La figure 3 est un agrandissement d'une denture de l'ensemble de transmission courroie souple synchrone/poulie dentée associée, pour expliciter la répartition des efforts exercés intervenant dans les phénomènes de bruit.

L'optimisation faisant l'objet du présent perfectionnement engendre un profil des flancs obliques (12) de la denture de courroie (10) d'une forme aussi identique que possible à celle de la paroi oblique du creux de dent (13), rigide, constituant le flanc de la poulie dentée associée.

Un tissu de revêtement (16) protège contre l'abrasion la surface de la composition élastomérique et définit le coefficient de frottement en regard de' la matière de la poulie dentée associée, le plus souvent métallique ou en plastique rigide. Préférentiellement, ledit tissu de revêtement (16) est choisi de façon à ce que ledit coefficient de frottement reste inférieur à 0,4.

Ledit tissu de revêtement (16) recouvre également la surface du sommet de denture de courroie (10) qui vient au contact du fond de creux de dent (15), aussi bien que la surface interne entre dents (9), revêtant ainsi toute la surface de la courroie souple synchrone (5) qui vient au contact de la surface rigide de la poulie dentée motrice (1), et de la (ou des) poulie(s) dentée(s) menée(s). Ledit tissu de revêtement (16) est choisi assez déformable, préférentiellement en tissu croisé, pour répartir au mieux la pression de contact entre la composition élastomérique et la paroi antagoniste rigide ; les légères compressions dans la surface interne entre dents (9), dues à la flexion de l'armature flexible (8), ou les flexions dissymétriques d'ensemble de la denture de courroie (10), qui, par cisaillement homogène, transmettent les pressions différentielles correspondant aux variations dynamiques de couple, demeurent de faible ordre de grandeur comme la pression de contact sensiblement homogène.

Ainsi la pression de compression sur toute la surface de la courroie souple synchrone (5) optimisée aura-t-elle une valeur très analogue à celle qui se produirait sur la surface interne d'une courroie plate sans fin fonctionnant par simple adhérence mécanique.

Simultanément, au droit de la surface interne entre dents (9), la flexion de l'armature flexible (8) - usuellement plus importante à la racine des dentures et, ainsi, source de fatigue - se trouve mieux répartie entre denture de courroie (10) et surface interne entre dents (9), délocalisant, de ce fait, les contraintes internes de ladite armature flexible (8).

L'épaisseur de composition élastomérique souple, comprise entre la nappe inextensible de l'armature flexible (8) et la surface de contact, procure à l'élastomère déformable un facteur de forme sensiblement constant et compatible avec le module de déformation de ladite composition élastomérique, choisi volontairement bas.

Ce facteur de forme, rapport entre la surface d'appui et la surface libre, présente le même ordre de grandeur dans la zone relativement courte de la surface interne entre dents (9) et le long de la surface d'appui d'une denture de courroie (10), enfermée sur trois côtés, dont la longueur du périmètre présente, avec la longueur de la surface interne entre dents (9) un rapport sensiblement égal au rapport des surfaces latérales correspondantes. Il en résulte que la rigidité locale de compression a sensiblement la, même valeur dans les deux zones, malgré la différence d'épaisseur de la composition élastomérique. Dans l'exemple cité précédemment, ledit rapport prend une valeur environ égale à 3, pour un pas de 8 millimètres.
La paroi latérale de la courroie souple synchrone (5), dans le sens transversal, qui constitue la surface libre lui conférant ledit facteur de forme, est appelée à gonfler pour résister à la pression exercée, du fait de l'incompressibilité volumétrique de la composition élastomérique. Ce phénomène se produit de la façon la plus continue possible, dans la zone d'enroulement de l'armature flexible (8) après sa trajectoire rectiligne (14). L'optimisation objet du présent perfectionnement vise également à ce que ce déplacement de paroi, de même nature que celui de la paroi d'un haut-parleur engendrant des ondes acoustiques, se produise de façon continue, le bombé restant en position spatiale stationnaire.
A ceci s'ajoute l'effet pneumatique dû à, l'entrée en jeu de la pression de contact, également progressive, par engrènement des profils en enroulement continu. L'air de la couche limite aérodynamique est chassé de façon continue et réapprovisionné de même, en évitant le claquement se produisant habituellement à l'entrée en contact des profils, la séparation étant, par les succions correspondantes, source d'ondes sonores, de façon analogue au décollement d'une ventouse.

Le procédé de fabrication d'une courroie souple synchrone perfectionnée selon l'invention n'est pas modifié par rapport aux techniques connues, la différence notable ne se situant qu'au niveau de la définition géométrique qui nécessite une plus grande précision géométrique de la forme des dentures du tambour de confection.
Un manchon cylindrique de longueur voulue est confectionné par enroulement des matériaux, en continu, sur le tambour de confection qui porte l'empreinte des dentures.

La première phase est la pose du tissu de revêtement sur le tambour de confection. Ce tissu de revêtement est choisi suffisamment élastique, dans le sens circonférentiel, pour revêtir ultérieurement toutes les faces des dentures sous l'effet de l'introduction de la composition élastomérique.

Les retors constituant l'armature souple sont enroulés hélicoïdalement par dessus.

En deuxième phase, se produisent simultanément la vulcanisation de la composition élastomérique et la liaison intime de l'ensemble des composants sous l'effet de la température et de la pression.

La troisième phase consiste en un usinage du dos lisse de la courroie souple synchrone, après refroidissement, l'état de surface qui en résulte constituant un facteur important de réduction du bruit, en évitant les vibrations engendrées au cours de la contre-flexion de la courroie souple synchrone au passage sur le galet de réglage.

La quatrième phase est le tranchage du manchon en courroies souples individuelles prêtes à livrer.

Les avantages du perfectionnement proposé à la définition géométrique des courroies souples synchrones sont :
- une réduction des sources de bruit par disparition des discontinuités dans la pression d'appui au contact de la courroie souple synchrone sur ses poulies dentées rigides associées ;
- une délocalisation des contraintes réduisant par conséquent l'usure et accroissant la durée de vie de la courroie ;
- une meilleure continuité des contraintes, garante d'une résistance améliorée à la fatigue alternative, en retardant l'apparition de craquelures qui amorcent les détériorations graves à l'origine de toute défaillance ;
- en continuité avec les exigences croissantes de températures d'utilisation, une meilleure homogénéité des sollicitations, contribution à une tenue à la chaleur améliorée.

En conclusion, en même temps que la réduction des sources de bruit, objectif principal de l'invention, la courroie souple synchrone perfectionnée présente une durée de vie améliorée grâce à la délocalisation des contraintes et ce, malgré la sévérité accrue des conditions d'utilisation.

## Revendications

1. Ensemble de transmission constitué d'une courroie souple synchrone (5) et de ses poulies dentées associées, motrice (1) et menée (3), équipé, pour ladite courroie souple synchrone (5), de dentures de synchronisation, en composition élastomérique intimement liée à une nappe flexible constituant l'armature de renforcement et, pour lesdites poulies dentées associées, de creux de géométrie conjuguée, à flancs obliques, de profil constant sur toute la largeur utile où se produit l'engrènement, ledit ensemble de transmission étant caractérisé en ce que la géométrie de ladite courroie souple synchrone (5) est définie par un rapport entre la longueur du périmètre d'une surface d'appui d'une denture de courroie (10), enfermée sur trois côtés par les flancs obliques (12) et par le sommet de denture venant au contact du fond du creux de dent (15) de la poulie dentée associée, motrice (1) ou menée (3), et la longueur de la surface interne entre dents (9) de ladite courroie souple synchrone (5), ledit rapport étant sensiblement égal au rapport des surfaces latérales correspondantes de façon que, lors de l'engrènement sur les poulies dentées associées à ladite courroie souple synchrone (5), le profil des sommets, des flancs et des creux de dentures de courroie(10) épouse, parfaitement et sans jeu, les profils des éléments rigides correspondants desdites poulies dentées associées, pour que la pression de contact demeure homogène sur toute la surface des sommets, des flancs obliques et des creux de dents.

2. Ensemble de transmission courroie souple synchrone (5)/poulies dentées associées selon la revendication 1, caractérisé en ce que ledit rapport entre la longueur du périmètre d'une surface d'appui d'une denture de courroie (10) et la longueur de la surface interne entre dents (9) est sensiblement égal à trois, pour application sur un moteur à quatre temps utilisant des poulies dentées associées au pas de huit millimètres.

3. Courroie souple synchrone (5) destinée à coopérer avec les poulies dentées associées, selon la revendication 1, caractérisée en ce que le bombé de sa paroi latérale dans le sens transversal, conséquence de la pression exercée, reste en position spatiale stationnaire en raison de la continuité de déplacement de ladite courroie souple synchrone, dans la zone d'enroulement de l'armature flexible (8), après sa trajectoire rectiligne (14).

4. Courroie souple synchrone (5) destinée à coopérer avec les poulies dentées associées, selon l'une des revendications 1 ou 3, caractérisée en ce qu'un tissu de revêtement (16), suffisamment déformable pour répartir la pression de contact entre la composition élastomérique constituant la denture de courroie (10) et la paroi antagoniste rigide, recouvre la totalité de la surface de ladite courroie souple synchrone (5) susceptible d'entrer en contact avec la face rigide de chaque poulie dentée associée et en ce que le coefficient de frottement dudit contact reste inférieur à 0,4.
